# EUROPEAN PATENT APPLICATION

(11) **EP 4 813 704 A1**
(43) Date of publication of application: **30.09.2026**
(21) Application number: 26166657.2
(22) Date of filing: 23.03.2026
(51) Int. Cl.: B60K 1/04

(54) **VEHICLE STRUCTURE**

(30) Priority: 26.03.2025 JP 2025052174
(71) Applicant: Toyota Jidosha Kabushiki Kaisha, Toyota-shi, Aichi-ken 471-8571 (JP)
(72) Inventor: YAMAMOTO, Yo, Toyota-shi, Aichi-ken, 471-8571 (JP)
(74) Representative: TBK

(57) **Abstract**

A vehicle structure includes a battery case that is arranged along a floor of a vehicle and that houses a battery cell inside; a battery equipment case that is arranged at a cabin side of an upper side of the battery case, that includes a battery equipment upper case and a battery equipment lower case having a structure divided in a vehicle height direction, and that houses a first equipment between the battery equipment upper case and the battery equipment lower case; and a cover case that configures part of the battery equipment case while covering the battery equipment upper case from a vehicle upper side, and houses a second equipment between the cover case and the battery equipment upper case.

## Description

### BACKGROUND

### Technical Field

The present disclosure relates to a vehicle structure.

### Related Art

A power storage device including plural battery cells is disclosed in Japanese Patent Application Laid-Open (JP-A) No. 2020-173918. The power storage device described in JP-A No. 2020-173918 is provided at a lower side of a vehicle rear seat.

### SUMMARY

However, in a configuration in which various equipment is provided to configure a power storage device or the like, there is a desire to be able to perform maintenance on such equipment easily, however the configuration described in JP-A No. 2020-173918 does not consider such a point.

In consideration of the above circumstances, the present disclosure provides a vehicle structure that enables maintenance to be performed on various equipment easily.

A vehicle structure of the first aspect includes a battery case, a battery equipment case, and a cover case. The battery case is arranged along a floor of a vehicle and houses a battery cell inside. The battery equipment case is arranged at a cabin side of an upper side of the battery case, includes a battery equipment upper case and a battery equipment lower case having a structure divided in a vehicle height direction, and houses a first equipment between the battery equipment upper case and the battery equipment lower case. The cover case configures part of the battery equipment case while covering the battery equipment upper case from a vehicle upper side and houses a second equipment between the cover case and the battery equipment upper case.

In the vehicle structure of the first aspect, maintenance can be performed on the second equipment by removing the cover case. Moreover, maintenance can be performed on the first equipment by removing the battery equipment upper case from the battery equipment lower case. This accordingly enables maintenance to be performed easily on various equipment in the vehicle structure of the first aspect.

A vehicle structure of a second aspect is the vehicle structure of the first aspect, wherein at least one member configuring the battery equipment case is made from die-cast aluminum.

In the vehicle structure of the second aspect, a higher heat dissipation performance can be achieved for equipment adjacent to the member made from die-cast aluminum than configurations lacking at least one member configuring the battery equipment case made from die-cast aluminum.

A vehicle structure of a third aspect is the vehicle structure of the second aspect, wherein the second equipment is arranged above a region at a vehicle front side of the battery equipment upper case.

In the vehicle structure of the third aspect, the second equipment can be maintained easily from the cabin side due to the second equipment being arranged above the region at the vehicle front side of the battery equipment upper case.

A vehicle structure of a fourth aspect in the vehicle structure of the third aspect, wherein a seat cushion is provided at a vehicle upper side of the battery equipment upper case, and a spacing in the vehicle height direction between the battery equipment upper case and the seat cushion at a vehicle front side end portion of the second equipment is wider than a spacing in the vehicle height direction between the battery equipment upper case and the seat cushion at a vehicle rear side end portion of the second equipment.

In the vehicle structure of the fourth aspect, the spacing in the vehicle height direction between the battery equipment upper case and the seat cushion at the vehicle front side end portion of the second equipment is wider than the spacing in the vehicle height direction between the battery equipment upper case and the seat cushion at the vehicle rear side end portion of the second equipment. The working space to perform maintenance on the second equipment can be widened in this configuration.

A vehicle structure of a fifth aspect is the vehicle structure of the fourth aspect, wherein a spacing in the vehicle height direction between the battery equipment upper case and the seat cushion widens on progression from the vehicle rear side end portion of the second equipment toward the vehicle front side end portion of the second equipment.

In the vehicle structure of the fifth aspect, the spacing in the vehicle height direction between the battery equipment upper case and the seat cushion widens on progression from the vehicle rear side end portion of the second equipment toward the vehicle front side end portion of the second equipment. The working space to perform maintenance on the second equipment can be further widened in this configuration.

A vehicle structure of a sixth aspect is the vehicle structure of any one aspect of the first aspect to the fifth aspect, wherein the cover case is configured with a structure divided in a vehicle width direction.

In the vehicle structure of the sixth aspect, due to the cover case having the structure divided in the vehicle width direction, good work characteristics can be achieved when installing the cover case to the cabin, and good work characteristics can be achieved when taking the cover case out from the cabin.

The vehicle structure according to the present disclosure exhibits the excellent advantageous effect of enabling maintenance to be performed easily to various equipment.

### BRIEF DESCRIPTION OF THE DRAWINGS

Exemplary embodiments of the present disclosure will be described in detail based on the following figures, wherein:

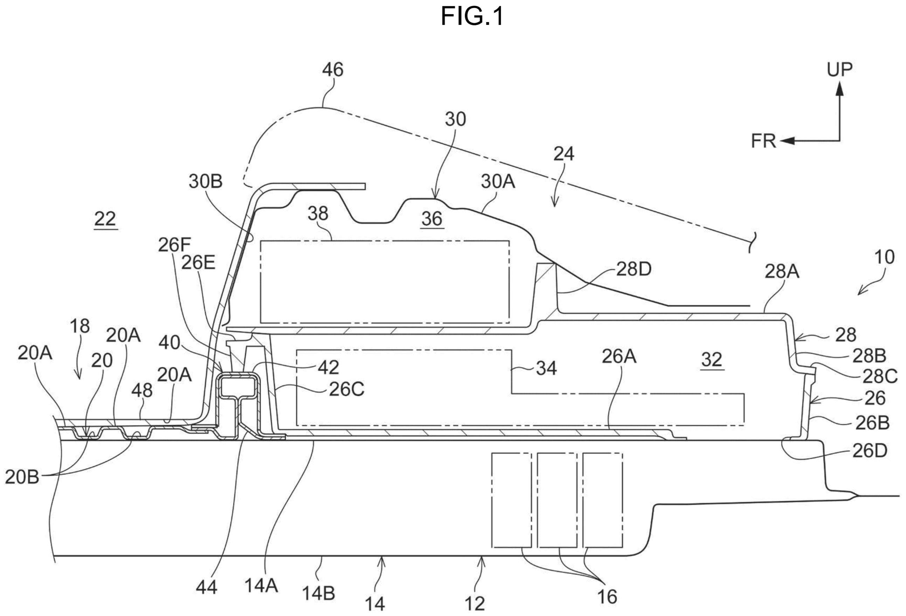

Fig. 1 is a cross-section illustrating a vehicle lower section at a rear side of a cabin, as sectioned along a front-rear direction and a height direction.

### DETAILED DESCRIPTION

Description follows regarding a vehicle lower section 10 applied with a vehicle structure according to an exemplary embodiment of the present disclosure, with reference to Fig. 1. Note that as appropriate in the drawing, an arrow FR indicates a vehicle forward direction, and an arrow UP indicates a vehicle upward direction. Moreover, front and rear, up and down, left and right directions stated alone in the following description indicate front and rear in a vehicle front-rear direction, up and down in a vehicle height direction, and left and right in a vehicle left-right direction (vehicle width direction).

As illustrated in Fig. 1, a battery pack 12 for storing power to supply to a vehicle motor is provided in the vehicle lower section 10. The battery pack 12 is configured including a battery case 14 formed in a box shape, and plural battery cells 16 housed inside a battery case 14. The battery case 14 is configured including an upper wall portion 14A configuring an upper section of the battery case 14, and a lower wall portion 14B configuring a lower section of the battery case 14. The upper wall portion 14A and the lower wall portion 14B are formed in plate shapes having a thickness direction in the height direction, and extending in the front-rear direction and the left-right direction. Plural battery cells 16 are arranged between the upper wall portion 14A and the lower wall portion 14B in a state alongside each other in the front-rear direction.

A floor forming member 20 is provided in the vehicle lower section 10 so as to form a vehicle floor 18. The floor forming member 20 is arranged at the upper side of the battery case 14 along the upper wall portion 14A of the battery case 14. Plural protruding beads 20A are formed to the floor forming member 20, with each formed with an upward protruding profile running along the vehicle width direction. Plural indented beads 20B are formed to the floor forming member 20, with each formed with a downward indented profile running along the vehicle width direction. The plural protruding beads 20A and the plural indented beads 20B are arranged alternately to each other along the front-rear direction.

Moreover, a battery equipment case 24 housing various equipment is provided at a cabin 22 side on the upper side of the battery case 14. The battery equipment case 24 is configured with a structure divided in the height direction that includes a battery equipment lower case 26 and a battery equipment upper case 28, and a cover case 30 covering the battery equipment upper case 28 from above.

The battery equipment lower case 26 is made from die-cast aluminum formed using an aluminum alloy. The battery equipment lower case 26 includes a lower wall 26A extending along the upper wall portion 14A of the battery case 14, a rear wall 26B extending upward from a rear end of the lower wall 26A, and a front wall 26C extending upward from a front end of the lower wall 26A. An opening 26D, to let a non-illustrated harness or the like pass through, is formed at a region on the rear side of the lower wall 26A. The battery equipment lower case 26 includes a front flange 26E that extends forward from an upper end of the front wall 26C, and bosses 26F that project downward from a region at the front side of the front flange 26E.

The battery equipment upper case 28 is, similarly to the battery equipment lower case 26, made from die-cast aluminum formed using an aluminum alloy. The battery equipment upper case 28 includes an upper wall 28A that extends in the front-rear direction and the left-right direction, a rear wall 28B that extends downward from a rear end of the upper wall 28A, and a rear flange 28C that extends rearward from a lower end of the rear wall 28B. Moreover, the battery equipment upper case 28 includes an upper projection 28D that projects upward from a front-rear direction intermediate portion of the upper wall 28A. The battery equipment upper case 28 is attached to the battery equipment lower case 26 from above, with a first equipment placement space 32 being formed between the battery equipment upper case 28 and the battery equipment lower case 26. A junction box 34, serving as an equipment, a first equipment, and a battery equipment, is arranged in the first equipment placement space 32. The junction box 34 is fixed to the lower wall 26A of the battery equipment lower case 26 through non-illustrated fixing members.

The cover case 30 is formed with a thinner thickness than that of the battery equipment lower case 26 and the battery equipment upper case 28 described above, such as by press-forming a steel sheet material. The cover case 30 of the present exemplary embodiment is configured with a structure divided in the vehicle width direction (for example, a structure divided in three). A vehicle height direction bending rigidity of the cover case 30 is set so as to be a lower bending rigidity than the vehicle height direction bending rigidity of the battery equipment lower case 26 and the battery equipment upper case 28 described above. The cover case 30 includes an upper wall 30A arranged so as to face the upper wall 28A of the battery equipment upper case 28 in the height direction, and a front wall 30B that extends downward from a front end of the upper wall 30A. The cover case 30 is attached to the battery equipment upper case 28 from above, and a second equipment placement space 36 is formed between the cover case 30 and the battery equipment upper case 28. A charger 38, serving as an equipment, a second equipment, and a charger equipment, is arranged in the second equipment placement space 36 at the front side of the upper projection 28D. The charger 38 is fixed to the upper wall 28A of the battery equipment upper case 28 through non-illustrated fixing members.

A cross member 40 spans along the vehicle width direction at an upper side with respect to the upper wall portion 14A of the battery case 14 and at a front side with respect to the front wall 26C of the battery equipment lower case 26. The cross member 40 is configured including a first cross member 42, which is formed with a hat shaped cross-section open on the lower side in the side cross-section illustrated in Fig. 1, and a second cross member 44, which is joined to the first cross member 42 in a state in which a large part thereof is disposed at the inside of the first cross member 42. The rear end portion of the floor forming member 20 is joined to the front end portion of the cross member 40. The front end portion of the battery equipment lower case 26 is fixed to the cross member 40 by screwing non-illustrated bolts, which have been inserted from above through the front flange 26E and the bosses 26F of the battery equipment lower case 26, into non-illustrated nuts provided to the cross member 40.

A seat cushion 46 configuring part of a vehicle rear seat is provided at the upper side of the cover case 30. A carpet 48 is provided at the lower side of the seat cushion 46, with the carpet 48 covering the battery equipment case 24 and the cross member 40 from the front side thereof, and also covering the floor forming member 20 from above.

A spacing in the height direction between the battery equipment upper case 28 and the seat cushion 46 at a front side end portion of the charger 38 is set so as to be wider than a spacing in the height direction between the battery equipment upper case 28 and the seat cushion 46 at a rear side end portion of the charger 38. Furthermore, the spacing in the height direction between the battery equipment upper case 28 and the seat cushion 46 is configured so as to widen on progression from the rear side end portion of the charger 38 toward the front side end portion of the charger 38.

### Present Exemplary Embodiment Operation and Advantageous Effects

Next, description follows regarding the operation and advantageous effects of the present exemplary embodiment.

In the present exemplary embodiment as described above, the charger 38 is fixed to the battery equipment upper case 28 in a state arranged at the upper side with respect to the junction box 34. In this configuration, easier maintenance can be performed on the charger 38 from the cabin 22 side than configurations in which the charger 38 is, the same as the junction box 34, also arranged in the first equipment placement space 32 at the lower side of the battery equipment case 24. More specifically, in the present exemplary embodiment, maintenance to the charger 38 can be performed by removing the cover case 30 from the battery equipment upper case 28. Moreover, maintenance of the junction box 34 can be performed by removing the battery equipment upper case 28 from the battery equipment lower case 26. In the vehicle structure of the present exemplary embodiment, maintenance of various equipment can accordingly be performed easily.

Moreover, in the present exemplary embodiment, the charger 38 is fixed to the upper wall 28A in a state arranged at an upper side of the upper wall 28A, which is a region on the front side of the battery equipment upper case 28. This thereby enables easy maintenance to be performed on the charger 38 from the cabin 22 side.

Moreover, in the present exemplary embodiment, the spacing in the height direction between the battery equipment upper case 28 and the seat cushion 46 at the front side end portion of the charger 38 is set so as to be wider than the spacing in the height direction between the battery equipment upper case 28 and the seat cushion 46 at the rear side end portion of the charger 38. In such a configuration, the working space to perform maintenance on the charger 38 can be made wider.

Moreover, in the present exemplary embodiment, the spacing in the height direction between the battery equipment upper case 28 and the seat cushion 46 widens on progression from the rear side end portion of the charger 38 toward the front side end portion of the charger 38. In this configuration, the working space to perform maintenance on the charger 38 can be made even wider.

Moreover, in the present exemplary embodiment, due to the cover case 30 having a structure divided in the vehicle width direction, good work characteristics can be achieved when installing the cover case 30 to the cabin 22, and good work characteristics can be achieved when taking the cover case 30 out from the cabin 22.

Moreover, in the present exemplary embodiment, the charger 38 can be protected by the cover case 30 due to the charger 38 being covered by the cover case 30 from above.

In the present exemplary embodiment, the battery equipment lower case 26 and the battery equipment upper case 28 that form the first equipment placement space 32 are made from die-cast aluminum. This configuration achieves a higher heat dissipation performance for the junction box 34 than configurations in which the battery equipment lower case 26 and the battery equipment upper case 28 are not made from die-cast aluminum.

Moreover, in the present exemplary embodiment, the battery equipment case 24 is provided at the cabin 22 side of the upper side of the battery case 14, and various equipment (the junction box 34, the charger 38, and the like) are housed inside the battery equipment case 24. The seat cushion 46 is provided at the upper side of the battery equipment case 24. Furthermore, the cross member 40 spans along the vehicle width direction at the vehicle upper side with respect to the battery case 14. Due to the front end portion of the battery equipment lower case 26 being fixed to the cross member 40, a configuration is achieved in which loads from regions at the front side of the battery equipment lower case 26 and the battery equipment upper case 28 configuring the battery equipment case 24 are received by the cross member 40. In this configuration, part of the load from the seat cushion 46 side can be borne by the cross member 40 through the battery equipment case 24. The load from the seat cushion 46 side can accordingly be suppressed from being input to the various equipment.

Moreover, in the present exemplary embodiment, the thickness of the cover case 30 is formed thinner than the thickness of the battery equipment lower case 26 and the battery equipment upper case 28. This means that the cover case 30 deforms when load is input to the battery equipment case 24 through the seat cushion 46, enabling load to be absorbed by the deformation.

Moreover, in the present exemplary embodiment, the vehicle height direction bending rigidity of the cover case 30 is set to a lower bending rigidity than the vehicle height direction bending rigidity of the battery equipment lower case 26 and the battery equipment upper case 28. This means enables the cover case 30 to readily deform in the vehicle height direction when load is input to the battery equipment case 24 through the seat cushion 46.

Note that part of each configuration of the present exemplary embodiment described above can be omitted or modified.

Although the present disclosure has been described by way of an exemplary embodiment, the present disclosure is not limited thereto, and obviously various other modifications may be implemented within a scope not departing from the spirit thereof.

## Claims

1. A vehicle structure comprising:
a battery case that is arranged along a floor of a vehicle and that houses a battery cell inside;
a battery equipment case that is arranged at a cabin side of an upper side of the battery case, that includes a battery equipment upper case and a battery equipment lower case having a structure divided in a vehicle height direction, and that houses a first equipment between the battery equipment upper case and the battery equipment lower case; and
a cover case that configures part of the battery equipment case while covering the battery equipment upper case from a vehicle upper side, and that houses a second equipment between the cover case and the battery equipment upper case.

2. The vehicle structure of claim 1, wherein at least one member configuring the battery equipment case is made from die-cast aluminum.

3. The vehicle structure of claim 2, wherein the second equipment is arranged above a region at a vehicle front side of the battery equipment upper case.

4. The vehicle structure of claim 3, wherein:
a seat cushion is provided at a vehicle upper side of the battery equipment upper case; and
a spacing in the vehicle height direction between the battery equipment upper case and the seat cushion at a vehicle front side end portion of the second equipment is wider than a spacing in the vehicle height direction between the battery equipment upper case and the seat cushion at a vehicle rear side end portion of the second equipment.

5. A vehicle structure of claim 4, wherein:
a spacing in the vehicle height direction between the battery equipment upper case and the seat cushion widens on progression from the vehicle rear side end portion of the second equipment toward the vehicle front side end portion of the second equipment.

6. The vehicle structure of claim 1, wherein the cover case is configured with a structure divided in a vehicle width direction.
